# EUROPÄISCHE PATENTSCHRIFT

(11) **EP 0 688 707 B1**
(45) Veröffentlichungstag und Bekanntmachung des Hinweises auf die Patenterteilung: **27.01.1999**
(21) Anmeldenummer: 95107098.6
(22) Anmeldetag: 11.05.1995
(51) Int. Cl.: B60S 3/00

(54) **Vorrichtung zur Beförderung von Kraftfahrzeugen durch eine Waschanlage**
Device for transporting of vehicles through a car wash
Dispositif pour le transport de véhicules au travers d'un dispositif de lavage

(30) Priorität: 25.05.1994 DE 4418027
(43) Veröffentlichungstag der Anmeldung: 27.12.1995
(73) Patentinhaber: Langner, Wolfgang, 24568 Kaltenkirchen (DE)
(72) Erfinder: Zobel, Günter, D-16909 Wittstock (DE)
(74) Vertreter: Emmel, Thomas, Dipl.-Biol., Dr.

(56) Entgegenhaltungen:
- EP-A- 0 359 162
- WO-A-92/12917
- CH-A- 449 514
- DE-U- 8 713 008
- US-A- 3 596 606

## Beschreibung

Die Erfindung bezieht sich auf eine Vorrichtung nach dem Oberbegriff des Anspruches 1.

In herkommliehen Waschanlagen werden die Fahrzeuge in der Regel mit den Rädern einer Seite in einer Fahrspur geführt. Der Vorschub des Fahrzeuges erfolgt mittels eines in Förderrichtung bewegten Mitnehmers, der mindestens eine an einem der geführten Fahrzeugräder angreifende und auf einer Achse quer zur Transportrichtung drehbar gelagerte Mitnehmerrolle aufweist. Die Fahrspur weist seitliche Begrenzungen auf, die ein Ausbrechen der geführten Räder verhindern sollen.

In einer gattungsgemäßen Vorrichtung, wie sie z.B. die DE-C-37 32 542 beschreibt, ist vorgesehen, daß die seitlichen Begrenzungen der Fahrspur durch in Förderrichtung bewegte Trume von zwei parallelen, beabstandeten und endlos umlaufenden Ketten gebildet werden. Beide Ketten sind in regelmäßigen Abständen über Lagerachsen miteinander verbunden, die an dem Fahrzeugrad angreifende Mitnehmerrollen tragen.

Vorteilhaft an dieser bekannten Konstruktion ist, daß die mitbewegten Führungsketten ein Überrollen der Fahrzeugräder, z.B. bei eingeschlagener Lenkung, besser verhindern als stationäre Führungselemente.

Nachteilig ist jedoch, daß während eines Kettenumlaufes immer sämtliche Mitnehmer in einer Ebene oberhalb der Fahrspur geführt werden, unabhängig davon, ob Bedarf besteht oder nicht. Es muß darauf geachtet werden, daß der Abstand zwischen den Mitnehmern größer ist als der größte zu erwartende Achsabstand eines zu reinigenden Kraftfahrzeuges. In aller Regel werden jedoch Fahrzeuge mit deutlich geringerem Achsabstand gereinigt. Hieran kann die bekannte Vorrichtung nicht individuell angepaßt werden, was einerseits zu unerwünschten Lücken zwischen den Fahrzeugen und auch zu unnötigem Zeitverlust bei dem Reinigungsvorgang führt.

Es existieren weiterhin nicht gattungsgemäße Vorrichtungen mit verstellbaren Mitnehmern, die von einer unterhalb der Fahrspur verlaufenden Kette geschleppt werden. Bestellt kein Bedarf, dann werden die Mitnehmer in einer Ebene unterhalb der Fahrspur geführt. Soll ein Fahrzeug gereinigt werden, dann läßt sich gezielt einer dieser Mitnehmer in eine Ebene oberhalb der Fahrspur klappen und in Eingriffsposition mit dem Fahrzeugrad bringen. Bei dieser Konstruktion können die Mitnehmer einen deutlich geringeren Abstand zueinander aufweisen, was eine individuelle Anpassung der Anlage an unterschiedliche Waschsituationen erleichtert. Bei diesen Vorrichtungen werden jedoch bislang nur stationäre Führungselemente vorgesehen.

Aufgabe der Erfindung ist es, eine Vorrichtung zu schaffen, die gleichzeitig eine optimale Führung der Räder und eine raum- und zeitsparende Durchführung von Waschvorgängen erlaubt.

Gelöst wird diese Aufgabe mit einer Vorrichtung, die die kennzeichnenden Merkmale des Anspruches 1 aufweist.

Danach ist vorgesehen, daß die in Förderrichtung bewegten Mitnehmer bzw. zumindest ihre die Mitnehmerrolle(n) tragenden Bereiche wahlweise in eine Position oberhalb oder unterhalb der Laufbahn der Fahrspur bringbar sind. Konkret bedeutet dies, daß nur bei Bedarf ein Mitnehmer mit seiner Mitnehmerrolle(n) in die Position oberhalb der Laufbahn angeordnet wird und dort dann in Eingriff mit einem zwischen den bewegten Führungsketten laufenden Fahrzeugrad gelangt. Alle anderen in diesem Durchgang nicht benötigten Mitnehmer verbleiben unterhalb der Laufbahn der Fahrzeugspur. Die erfindungsgemäße Vorrichtung vereinigt damit die Vorteile der beiden in der Beschreibungseinleitung erwähnten Vorrichtungen und vermeidet ihre Nachteile.

Vorteilhafte Ausgestaltungen der Erfindung sind in den Unteransprüchen angegeben.

Eine Ausgestaltung betrifft die Bewegung der Mitnehmer. Die Mitnehmer können z.B. von einer der beiden in der Führungseinrichtung enthaltenen Ketten geschleppt werden. Denkbar ist z.B., daß die Mitnehmerrolle(n) des Mitnehmers über ein längliches Verbindungselement höhenverstellbar bzw. schwenkbar an einem Kettenglied angeordnet ist. Eine Weiche sorgt dafür, daß die Mitnehmerrolle(n) wahlweise zu Beginn der Fahrspur oberhalb oder unterhalb ihrer Laufbahn ausgerichtet werden. Eine solche Konstruktion ist möglicherweise jedoch relativ schwierig in zufriedenstellender Weise zu verwirklichen.

Eine vorteilhafte Ausgestaltung der Erfindung sieht daher gemäß Anspruch 2 vor, daß die Mitnehmer von einer separaten Kette geschleppt werden, deren in Förderrichtung laufendes Trum unterhalb der Laufbahn der Fahrspur angeordnet ist. Diese Ausgestaltung weist also insgesamt drei Ketten auf, von denen zwei zur seitlichen Führung und eine zum Schleppen der Mitnehmer dient. Die Mitnehmer können hierbei z.B. ein längliches Verbindungsglied aufweisen, das an der Schleppkette in Förderrichtung verschwenkbar angeordnet ist. Das Verbindungsglied kann selbstverständlich auch z.B. zwei über ein Gelenk gegeneinander verschwenkbare Teile aufweisen und dann starr mit der Kette verbunden sein. An seinem freien Ende trägt das Verbindungselement eine bzw. mehrere Mitnehmerrollen. Die Einstellung der Mitnehmerrollen läßt sich über eine zu Beginn der Fahrspur vorgesehene Weiche steuern. In einer Stellung liebt die Weiche die Mitnehmerrollen in eine Position über der Laufbahn an, wobei dann das Verbindungselement in einem in der Laufbahn der Fahrspur vorgesehenen, den Durchtritt erlaubenden Schlitz läuft. Besteht kein Förderbedarf, dann beläßt die Weiche die Mitnehmerrolle in einer Position unterhalb der Laufbahn. Diese Ausgestaltung ist konstruktiv besonders einfach zu verwirklichen. Sie erlaubt darüber hinaus eine optimale Kraftübertragung und eine besonders einfache wahlweise Einstellung der Mitnehmer.

Weiterhin vorteilhaft ist gemäß Anspruch 3 vorgesehen, daß der Mitnehmer mehrere Rollenpaare aufweist, von denen im hochgeklappten Zustand ein Paar in Eingriff mit dem Reifen bringbar ist, und zwei weitere Rollenpaare für eine obere und untere Abstützung des Mitnehmers auf der Laufbahn sorgen. Vorteilhaft ist, daß ein derartiger Mitnehmer besonders sicher geführt werden kann.

Nach Anspruch 4 können Führungs- und Fördereinrichtung in einer Einheit zusammengefaßt sein. Dies erlaubt eine besonders schnelle und kostengünstige Installation in Waschanlagen.

Schließlich sieht Anspruch 5 in vorteilhafter Weise vor, daß die Ketten der Führungseinrichtung so geformt sind, daß die Fahrzeugräder beim Kontakt nicht beschädigt werden. Es ist in diesem Zusammenhang z.B. möglich, die Kettenglieder in ihren Randbereichen zu verrunden. Weiterhin sollten die Ketten an ihrer den Fahrzeugrädern zugewandten Seite keine scharfkantigen Vorsprünge etc. aufweisen.

Die Erfindung soll im folgenden anhand zweier Abbildungen, die ein bevorzugtes Ausführungsbeispiel darstellen, näher erläutert werden.
- Fig. 1: zeigt einen Schnitt durch die Laufbahn einer bevorzugten Ausführung der erfindungsgemäßen Vorrichtung
- Fig. 2: zeigt eine grob schematisierte seitliche Teilansicht auf die eine Längshälfte der in Fig. 1 im Schnitt dargestellten Laufbahn .

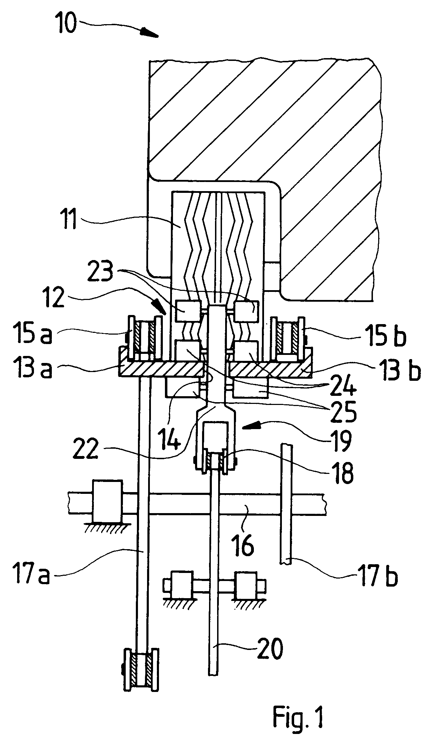

Fig. 1 zeigt eine Teilschnittansicht eines Fahrzeuges 10 mit seinem einen seitlichen Vorderrad 11. Das Rad 11 rollt in einer Fahrspur 12 auf einer durch zwei seitliche Abstützabschnitte 13a, b ausgebildeten Laufbahn. Die Abstützabschnitte 13a, b begrenzen einen mittigen Schlitz 14 in der Laufbahn der Fahrspur 12. Die Fahrspur 12 wird zu beiden Seiten durch jeweils eine endlos umlaufende Kette 15a, 15b begrenzt. Schematisch angedeutet sind auf einer Welle 16 gelagerte Kettenräder 17a und 17b, über die die Ketten 15a und 15b umgelenkt und in einer unteren Ebene zurückgeführt werden.

Unterhalb der Laufbahn der Fahrspur 12 ist eine weitere endlos umlaufende Kette 18 vorgesehen, an der in Umlaufrichtung beabstandet Mitnehmer 19 angelenkt sind. Auch hier ist wieder ein Kettenrad 20 dargestellt, auf dem die Kette 18 an dem einen Ende der Fahrspur 12 umgelenkt und in einer unteren Ebene zurückgeführt wird.

Im gezeigten Fall ist der Mitnehmer 19 hochgeklappt und ist in Eingriff mit dem Fahrzeugrad 11.

Der Mitnehmer weist ein längliches Verbindungsglied 22 auf, das mit seinem einen Ende an der Kette 18 um eine Achse quer zur Kettenebene schwenkbar befestigt ist und das in seinem anderen freien Endbereich ein Mitnehmerrollenpaar 23 trägt, mit dem der Mitnehmer 19 an dem Fahrzeugrad 11 angreift. Weitere Rollenpaare 24 und 25 dienen zur Abstützung des Mitnehmers 19 gegen die Laufbahn der Fahrspur 12. Der Schlitz 14 ist so dimensioniert, daß das Verbindungsglied 22 reibungsarm darin geführt werden kann.

Im Betrieb laufen die Ketten 15a, 15b und 18 mit gleicher Geschwindigkeit in Förderrichtung. Die mitbewegten Führungsketten 15a und 15b sorgen dafür, daß das Fahrzeug selbst bei eingeschlagener Lenkung die Fahrspur 12 nicht verlassen kann. In diesem Fall rollt das eingeschlagene Rad gegen eine der beiden seitlichen Ketten 15a oder 15b an und wird dann infolge der Kettenbewegung in die Fahrspur zurückgelenkt. Eine stillstehende Kette oder andere ortsfeste, seitliche Begrenzung würde das eingeschlagene Rad dagegen überklettern und dann die Fahrspur verlassen.

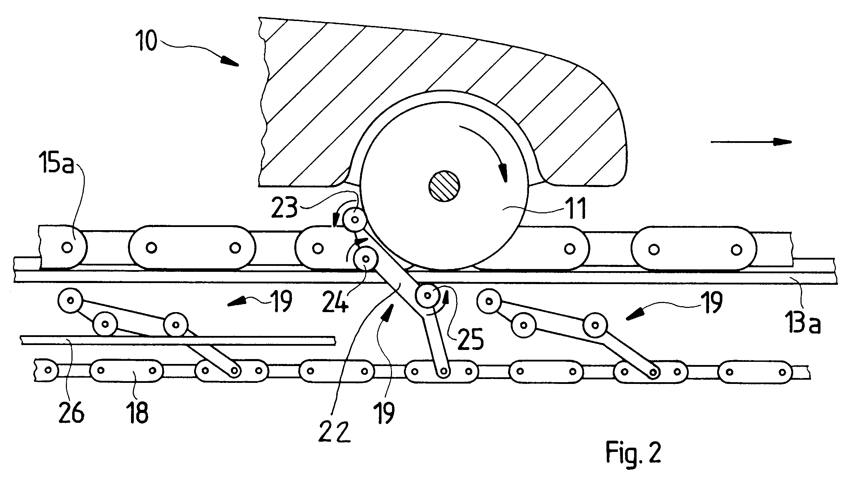

Zur weiteren Erläuterung der Erfindung wird auf Fig. 2 verwiesen, die eine seitliche Teilansicht auf eine Längshälfte der in Fig. 1 dargestellten Ausführung zeigt. Man erkennt zunächst wieder das im Schnitt dargestellte Kraftfahrzeug 10 mit seinem einen Vorderrad 11. Das Fahrzeugrad 11 rollt in einer Fahrspur, von der in dieser Abbildung lediglich der linke Abstützabschnitt 13a mit der seitlich begrenzenden Kette 15a zu erkennen ist. Unterhalb der Laufbahn verläuft die Kette 18, an der die Mitnehmer 19 angelenkt sind. Man erkennt, daß zwei der dargestellten Mitnehmer 19 in einem Schwenkzustand (z.B. im linken Bereich der Abbildung) unterhalb der Laufbahn angeordnet sind, während der mittlere Mitnehmer 19 hochgeklappt ist und mit seinem Rollenpaar 23 am Fahrzeugrad 11 angreift. Man erkennt weiterhin die Rollenpaare 24 und 25, die den Mitnehmer oberhalb und unterhalb der hier nur durch den Stützabschnitt 13a repräsentierten Laufbahn der Fahrspur abstützen. Die Drehrichtung der einzelnen Rollenpaare sowie des Fahrzeugrads und die Förderrichtung ist mit Pfeilen angedeutet. Die unterhalb der Laufbahn angeordneten Mitnehmer 19 werden von einer nur schematisch angedeuteten Schiene 26 gehalten.

Selbstverständlich können anstelle der gezeigten Mitnehmer auch andere Konstruktionen, die für z.B. speziellen Reifen geeignet sind, eingesetzt werden. Der Mitnehmer kann im einfachsten Fall auch nur ein Rollenpaar aufweisen. Weiterhin ist es auch nicht erforderlich, Ketten zur Führung bzw. zum Schleppen des Mitnehmers einzusetzen. Hier könnte man auch andere Hülltriebe einsetzen, die die entsprechenden Anforderungen erfüllen. *Der Begriff Hülltriebe bezeichnet generell die bereits genannten Kettentriebe aber auch z.B. Band- oder Seiltriebe (siehe Hütte, Des Ingenieurs Taschenbuch II 27. Auflage, Seite262 Kapitel P- Berlin, Verlag von Wilhelm Ernst & Sohn.)*.

Die Verstellung der Mitnehmer aus der Position unterhalb der Fahrspur in eine Position oberhalb der Laufbahn erfolgt im einfachsten Fall mittels einer nicht dargestellten Weiche. Derartige Weichen gehören zum Standardrepertoire eines Fachmannes. Sie werden in Förderrichtung gesehen, zu Beginn der Laufbahn angeordnet und können dort z.B. in einer Position eines der Rollenpaare des Mitnehmers untergreifen und im Zuge der weiteren Beförderung über eine Kurve so führen, daß der Mitnehmer hochgeklappt wird. Hier sind aber auch eine ganze Reihe von anderen Möglichkeiten denkbar. Es ist z.B. insbesondere auch möglich, daß die Mitnehmer bei Bedarf von hand hochgeklappt werden und am Ende der Fahrspur automatisch wieder in die abgesenkte Position zurückfallen. Hier sind die unterschiedlichsten Lösungsansätze denkbar, die alle im Rahmen der Erfindung liegen.

## Patentansprüche

1. Vorrichtung zur Förderung von Kraftfahrzeugen in einer Waschanlage mit einer zwei endlos umlaufende Ketten (15a, 15b) ***oder andere Hülltriebe*** aufweisenden Führungseinrichtung zur Führung eines Fahrzeugrades (11) auf einer Laufbahn (13a, 13b) innerhalb einer definierten Fahrspur, wobei die Ketten (15a, 15b) so angeordnet und ausgerichtet sind, daß sie in Förderrichtung bewegte, die Fahrspur (12) zu beiden Seiten begrenzende Trume aufweise, und mit einer Fördereinrichtung, die endlos umlaufende ***mittels Ketten oder anderer Hülltriebe geschleppte*** Mitnehmer (19) mit jeweils mindestens einer in Fördereingriff mit einem geführten Fahrzeugrad bringbaren Mitnehmerrolle (23) aufweist, **dadurch gekennzeichnet**, daß mindestens die die Mitnehmerrollen (23) tragenden Bereiche der Mitnehmer (19) wahlweise in eine Position unterhalb oder oberhalb der Laufbahn der Fahrspur (12) bringbar sind.

2. Vorrichtung nach Anspruch 1, **dadurch gekennzeichnet**, daß zum Schleppen der Mitnehmer (19) eine mit einem in Förderrichtung bewegten Trum unterhalb der Laufbahn der Fahrspur (12) geführte Kette (18) vorgesehen ist.

3. Vorrichtung nach den Ansprüchen 1 und 2, **dadurch gekennzeichnet**, daß der Mitnehmer (19) Rollen (24, 25) zur Führung auf der Laufbahn der Fahrspur (12) aufweist.

4. Vorrichtung nach einem der Ansprüche 1 bis 3, **dadurch gekennzeichnet**, daß Führungseinrichtung und Fördereinrichtung als Baueinheit in einem Gehäuse zusammengefaßt sind.

5. Vorrichtung nach einem der Ansprüche 1 bis 4, **dadurch gekennzeichnet**, daß die Ketten (15a, 15b) der Führungseinrichtung so geformt sind, daß eine Beschädigung der Fahrzeugräder vermieden wird.

## Claims

1. Apparatus for transporting motor vehicles in a washing installation including a guide device, which has two endless rotating chains (15a,15b) or other endless flexible drives, for guiding a vehicle wheel (11) on a running surface (30a,30b) within a defined track, the chains (15a,15b) being so arranged and aligned that they have runs which are moved in the transport direction and define the track (12) on both sides, and including a conveying device, which has endlessly rotating carriers (19), pulled along by means of chains or other continuous drives, with at least one respective carrier roller (23), which may be moved into transport engagement with a guided vehicle wheel, characterised in that at least the regions of the carriers (19) which carry the carrier rollers (23) are movable selectively into a position below or above the running surface of the track (12).

2. Apparatus as claimed in claim 1, characterised in that a chain (18), which is guided beneath the running surface of the track (12) and has a run moved in the transport direction, is provided for pulling the carriers (19) along.

3. Apparatus as claimed in claims 1 and 2, characterised in that the carrier (19) has rollers (24,25) for guiding on the running surface of the track (12).

4. Apparatus as claimed in one of claims 1 to 3, characterised in that the guide device and conveying device are combined as a unit within a housing.

5. Apparatus as claimed in one of claims 1 to 4, characterised in that the chains (15a,15b) of the guide device are so shaped that damage to the vehicle wheels is avoided.

## Revendications

1. Dispositif pour le transport de véhicules dans une installation de lavage, équipé d'un dispositif de guidage comportant deux chaîne en rotation sans fin (15a, 15b) *ou d'autres entraînements selon une course enveloppante* pour le guidage d'une roue (11) du véhicule sur une voie de roulement (13a, 13b) à l'intérieur d'une trace (12) définie, les chaînes (15a, 15b) étant agencées et orientées de façon à présenter des sections mobiles dans le sens du transport limitant des deux côtés la trace de roulement, et équipé d'un dispositif d'entraînement comportant des poussoirs (19) entraînés sans fin *par des chaînes ou autres entraînements selon une course en*veloppante et comportant chacun au moins un galet d'entraînement (23) pouvant être placé en prise avec une roue du véhicule guidée, **caractérisé en ce** qu'au moins les parties des poussoirs (19) portant les galets d'entraînement (23) peuvent, au choix, être positionnés au-dessous ou au-dessus de la voie de roulement de la trace. (12).

2. Dispositif selon la revendication 1, **caractérisé en ce qu'**une chaîne (18) passant sous la voie de roulement de la trace (12) et comportant une section mobile dans le sens du transport est prévue pour l'entraînement des poussoirs (19).

3. Dispositif selon les revendications 1 et 2, **caractérisé en ce que** le poussoir (19) est muni de galets (24, 25) pour assurer le guidage sur la voie de roulement de la trace (12).

4. Dispositif selon l'une des revendications 1 à 3, **caractérisé en ce que** le dispositif de guidage et le dispositif d'entraînement sont réunis sous un carter pour former une unité.

5. Dispositif selon l'une des revendications 1 à 4, **caractérisé en ce que** les chaînes (15a, 15b) du dispositif de guidage sont conformées de façon à éviter d'endommager les roues du véhicules.
